# EUROPEAN PATENT SPECIFICATION

(11) **EP 2 079 635 B1**
(45) Date of publication and mention of the grant of the patent: **17.08.2011**
(21) Application number: 07819462.8
(22) Date of filing: 30.10.2007
(51) Int. Cl.: B64D 11/00, B64D 13/08, F25B 21/02

(54) **COOLING DEVICE FOR INSTALLATION IN AN AIRCRAFT**
KÜHLVORRICHTUNG ZUR INSTALLATION IN EINEM FLUGZEUG
DISPOSITIF DE REFROIDISSEMENT DESTINÉ À ÊTRE INSTALLÉ DANS UN AÉRONEF

(30) Priority: 09.11.2006 DE 102006052959; 09.11.2006 US 864996 P
(43) Date of publication of application: 22.07.2009
(73) Proprietor: Airbus Operations GmbH, 21129 Hamburg (DE)
(72) Inventor: REISS, Matthias, 22607 Hamburg (DE); EBIGT, Wolfgang, 22673 Hamburg (DE); FREY, Andreas, 88090 Immenstaad (DE)
(74) Representative: Beyer, Andreas
(86) International application number: PCT/EP2007/009427
(87) International publication number: WO 2008/055607

(56) References cited:
- EP-A- 0 655 593
- WO-A-2004/071239
- DE-A1- 3 639 089
- DE-C1- 4 308 144
- JP-A- 2000 304 396
- US-A- 5 269 146
- US-A- 5 653 111
- US-A1- 2003 042 361
- US-B1- 6 338 251

## Description

### Field of the invention

The present invention relates to a cooling device for installation in an aircraft, in particular a passenger aircraft.

### Background of the invention

Certain food, such as, for example, fish or ice cream, must be cooled or kept frozen, in particular on long-distance flights, until it is prepared for consumption. This relates not only to food, but also to medicines or other pharmaceutical preparations which are intended as an emergency supply for the passengers.

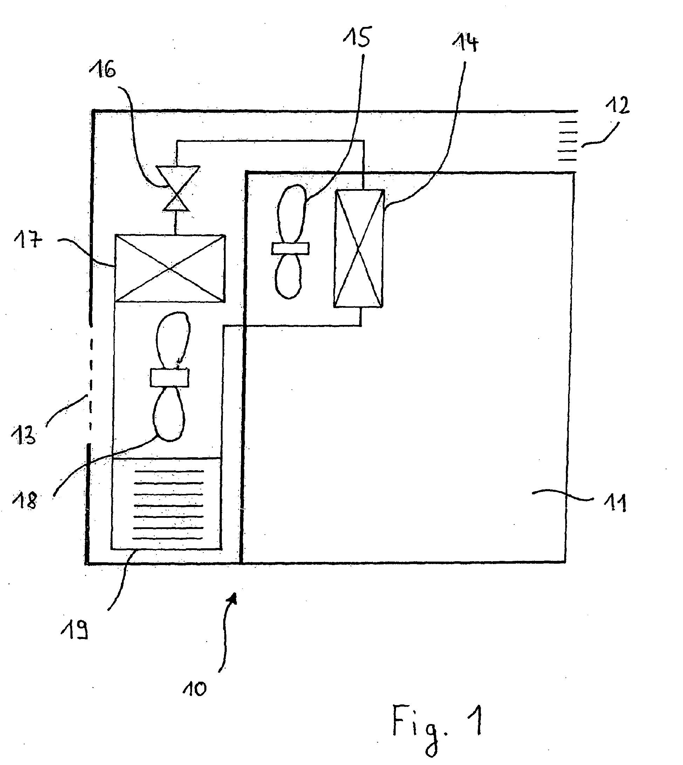

Cooling appliances are provided for cooling or freezing on board a passenger aircraft, these normally being connected to the electrical power supply of the aircraft. These cooling appliances operate according to the known principle of a refrigeration cycle process. In a process of this kind the coolant cyclically changes its state of aggregation from liquid to gaseous and back. When the state of aggregation changes from liquid to gaseous, the coolant absorbs thermal energy, whereas it releases thermal energy when a change takes place from gaseous to liquid. A schematic representtation of a conventional compression-type refrigerating machine is shown in Figure 1.

In a conventional compression-type refrigerating machine 10 the gaseous refrigerant is firstly compressed by a compressor 19. It is subsequently condensed (liquefied), while releasing heat, in a condenser 17. A nozzle 16 causes the liquefied refrigerant to expand, this being evaporated, while absorbing heat, in an evaporator 14. Due to the cooling capacity provided by the evaporator 14, heat is removed from the air in a cooling compartment 11. The cycle is now concluded and can recommence in the compressor 19. Energy must be supplied to the compressor 19 from outside in order to keep this process going.

A fan 15 is used in order to improve the heat transfer as well as the temperature distribution in the cooling compartment 11. A further fan 18 sucks in, through an air inlet 12, outside air which is heated by the heat released by the evaporator 17. This heated air is delivered to the environment through the fan 18 via an air outlet 13.

On account of the high number of components required for the compression-type refrigerating machine which is represented in Figure 1, a relatively large construction space is necessary, which is of disadvantage in particular on board an aircraft. These compression-type refrigerating machines are also relatively heavy and produce vibrations and noise on account of the intermittently working compressor. Moreover, the heat which is removed from the cooling compartment 11 is released to the air surrounding the cooling appliance. Therefore, when installing a cooling appliance of this kind in small closed push-in compartments in a galley, a constant air exchange must be guaranteed in order to prevent overheating of the cooling appliance and excessive heating of the environment. For this purpose it is necessary to provide a suction system which can only be integrated into the often cramped conditions with a relatively high constructional expenditure.

WO 2004/071239 A1 discloses a cooling unit for a service trolley for use in an aircraft or train. The cooling unit comprises a Peltier element located inside a heat-insulating material which divides a drawer of the trolley in a forward cooling section and a rearward intermediate section defined by the rear wall of the drawer and the heat-insulating material. Each end of the Peltier element is connected in a heat-transferring manner with a heat exchanger. The Peltier element serves to cool the cooling section of the drawer of the service trolley. In each of the cooling section and the intermediate section there is provided a fan for circulating the relatively warm air in the intermediate section and the relatively cold air in the cooling section. When the service trolley has been parked in a galley of the aircraft, an opening in the rear wall of the drawer is aligned with an opening in the wall of the galley. Warm air from the intermediate section of the drawer is circulated through the wall opening into a central air circulation system.

A thermoelectric cooling device, in particular for a cooler for an automobile, is described in DE 36 39 089 A1. The thermoelectric cooling device includes at least one Peltier block. The warm side of the Peltier block is connected in a heat-transferring manner with a first heat exchanger through which a liquid coolant from a liquid coolant supply circuit is circulated, and the cold side of the Peltier block is in thermal contact with a ribbed recuperator which takes up the entire cross section of a flow channel through which air to be cooled is circulated. The cooled air is then discharged by means of a fan into the cooling space of the cooler. The liquid coolant supply circuit is provided with a third heat exchanger for cooling the liquid coolant. Both the first heat exchanger and the ribbed recuperator are disposed outside the cooling space of the cooler.

The invention is therefore based on the object of providing a cooling device for installation in an aircraft which requires little construction space, is easy to install and in the case of which the air surrounding the cooling device does not have to be exchanged.

### Summary of the invention

This object is achieved by a cooling device for installation in an aircraft, in particular a passenger aircraft, which comprises a heat exchanger configured for flow-through of a liquid coolant for pre-cooling a cooling chamber of the cooling device to a temperature of the liquid coolant, the heat exchanger being coupled in a heat-transferring manner to a thermoelectric cooling element which is in thermal contact with the cooling chamber of the cooling device for cooling the cooling chamber (34) to a temperature which is below the temperature of the liquid coolant, wherein the heat exchanger and the thermoelectric cooling element are disposed inside the cooling chamber of the cooling device, and wherein the heat exchanger is configured for connection to a liquid coolant supply system installed on board the aircraft.

The heat exchanger which is disposed in the cooling device and through which a liquid coolant can flow causes heat to be removed from the air in the cooling chamber of the cooling device and therefore the cooling chamber to be cooled. Since, moreover, a thermoelectric cooling element which is in thermal contact with the cooling chamber of the cooling device is coupled in a heat-transferring manner to the heat exchanger, the air in the cooling chamber of the cooling device can be cooled to a temperature which is lower than the temperature of the liquid coolant. As the heat exchanger is configured for connection with a liquid coolant supply system which is installed on board the aircraft, the liquid coolant which is provided by the supply system is used to dissipate the heat which is removed from the cooling chamber of the cooling device. It is as a result possible to avoid a suction system which is complicated to install, as is necessary for the air exchange in the conventional compression-type refrigerating machine. The cooling device can therefore be installed in a space-saving manner and without a high constructional expenditure in a push-in compartment of a galley. As the heat exchanger and the thermoelectric cooling element are disposed inside the cooling chamber of the cooling device, efficient pre-cooling of the air in the cooling chamber of the cooling device through the heat exchanger and even further cooling of the air to below the temperature level of the liquid coolant flowing through the heat exchanger can be achieved. Additionally, a liquid coolant flows through the heat exchanger. A liquid coolant has a higher energy density on account of its higher thermal capacity. The liquid coolant can as a result absorb and dissipate more energy (heat) per unit of volume. Moreover, the requirements to be met in terms of tightness of the heat exchanger are lower.

According to one preferred configuration of the invention, the thermoelectric cooling element is a Peltier element. If the warm side of the Peltier element is cooled by the heat exchanger through which the liquid coolant can flow, the cold side of the Peltier element is cooled further, resulting in a large temperature difference between the two sides of the Peltier element, according to the material which is used for the Peltier element and the applied current. Peltier elements of this kind can be installed very easily and in a space-saving manner and require just one power connection to produce the desired temperature difference.

According to a further preferred embodiment of the invention, the heat exchanger can be connected through an intake and a return for the liquid coolant to a line system which is installed on board the aircraft. The line system which is installed on board the aircraft provides the liquid coolant for the cooling device. The line connections require a comparatively small construction space and the heat is dissipated via this so-called refrigeration bus. It is as a result possible to install the cooling device in small compartments which are closed off from the aircraft cabin.

The heat exchanger is preferably formed according to the counterflow principle, which results in a further increase in the efficiency of the heat exchanger with regard to its cooling effect.

According to one preferred embodiment of the invention, the heat exchanger comprises a throttle element which throttles the flow volume of the liquid coolant through the heat exchanger. A specific temperature can be set in the cooling chamber of the cooling device through this throttle element, which is preferably formed as a control valve.

According to a further configuration of the invention, the throttle element is disposed in the return.

In addition, according to one preferred embodiment of the invention, a fan is disposed in the cooling chamber of the cooling device. This fan circulates the air in the cooling chamber, as a result of which the heat transfer to the refrigerant as well as the heat exchanger is improved and the temperature distribution in the cooling chamber of the cooling device is rendered more homogeneous.

According to a further preferred embodiment of the invention, the liquid coolant does not undergo a phase transition during operation of the cooling device. The cooling device can thus be operated in a more energy-saving manner, as energy is absorbed or released upon each phase transition, this subsequently being required again in order to again attain the original phase state of the liquid coolant. Moreover, one form of energy cannot be completely converted into another form of energy, so that a cooling system in which the liquid coolant undergoes a phase transition must be supplied with energy from outside after each complete cooling cycle. This additional energy is not required in the case of the cooling device according to this preferred embodiment.

According to a further configuration of the invention, the heat exchanger and the thermoelectric cooling element are formed such that the cooling chamber can be cooled to a temperature below 0°C. The cooling device can therefore be used to freeze food and other products such as, for example, medicines, which must be available as an emergency supply for the passengers during a long-distance flight.

The invention is described in the following by way of example on the basis of a preferred embodiment with reference to schematic drawings which represent this preferred embodiment.

### Brief description of the drawings

In the figures:
- Figure 1: represents a conventional compression-type refrigerating machine;
- Figure 2: represents a cooling device according to a preferred embodiment of the invention, and
- Figure 3: depicts a heat exchanger which can be used in the cooling device of Figure 2 and which is configured according to the counterflow principle.

### Description of a preferred embodiment of the invention

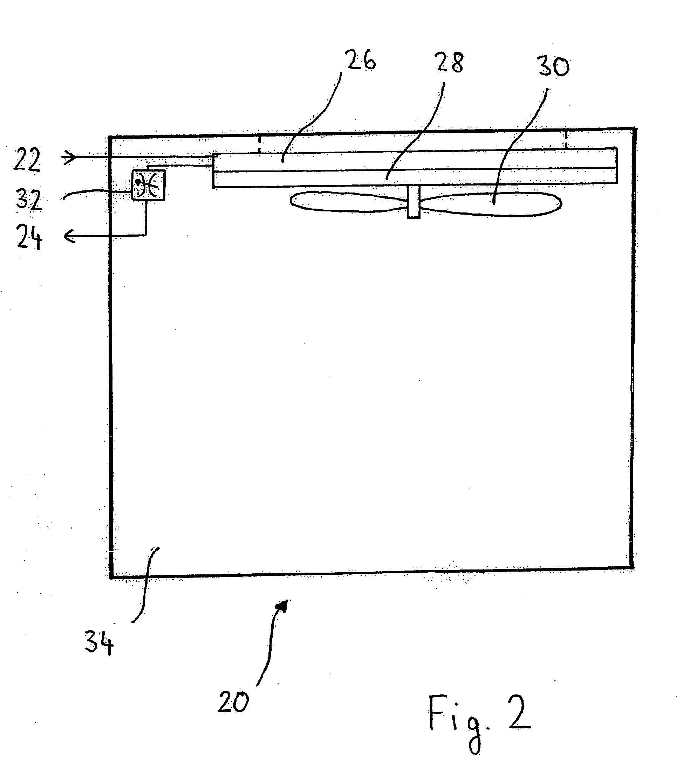

The cooling device 20 which is represented in Figure 2 comprises a cooling chamber 34 in which a heat exchanger 26 and a thermoelectric cooling element 28, for example a Peltier element, are disposed. The heat exchanger 26 is coupled in a heat-transferring manner to the Peltier element 28. The heat exchanger 26 is connected via an intake 22 and a return 24 to a line system (not shown) which is installed on board the aircraft. A liquid coolant which is provided by the line system can thus flow through the heat exchan-ger. The temperature of the liquid coolant which is used in this embodiment typically lies below 0°C.

A throttle element 32, for example a control valve, is disposed in the return 24, which element controls the flow volume of the liquid coolant through the heat exchanger 26. A fan 30 is in addition provided in the cooling chamber 34 to circulate the air in order to improve the heat transfer to the heat exchanger 26 as well as the thermoelectric cooling element 28 and to provide a more homogeneous temperature distribution in the cooling chamber 34 of the cooling device 20.

The heat exchanger 26 through which the liquid coolant can flow guarantees pre-cooling of the air in the cooling chamber 34, while the temperature level in the cooling chamber 34 can be lowered further by the Peltier element 28. It is as a result possible to attain temperatures in the cooling chamber 34 which are sufficient for freezing products, for example food or medicines.

As the cooling device 20 comprises an open cooling circuit, the heat which is released upon cooling can be dissipated through the liquid coolant via a refrigeration bus. The cooling device 20 does not therefore require a refrigerating machine with a closed cooling circuit in which the heat which is generated by the refrigerating machine must be dissipated through a separate suction system on account of the changes of the state of aggregation of the liquid coolant. The line connections 22, 24 of the refrigeration bus require only a small construction space when compared with the conventional compression-type refrigerating machine which is represented in Figure 1. The cooling device 20 can thereby be installed in small compartments which are closed off from the aircraft cabin.

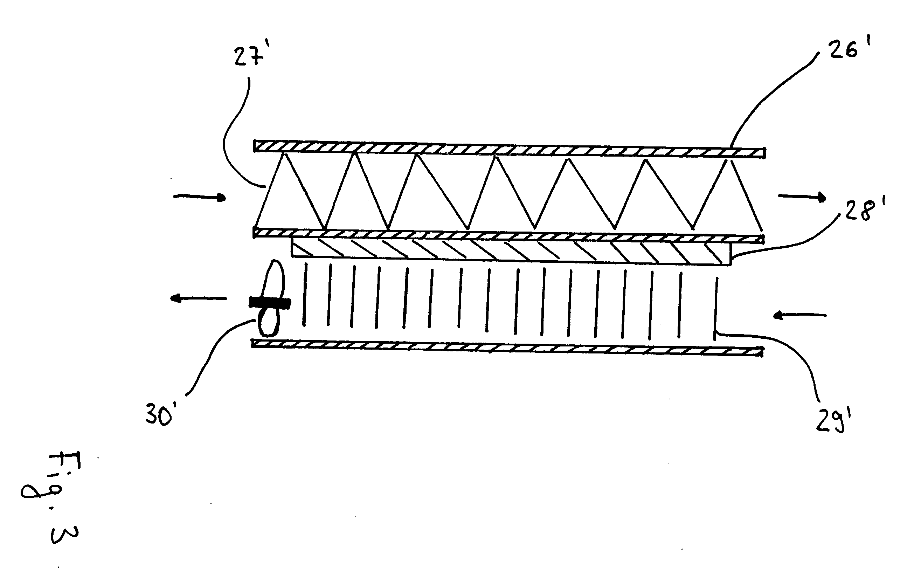

Figure 3 shows a heat exchanger 26' which can be used in the cooling device 20 of Figure 2. The heat exchanger 26' of Figure 3 is configured according to the counterflow principle.

The heat exchanger 26' comprises an upper conduit through which a liquid coolant from a liquid coolant supply system installed on board the aircraft flows in one direction (in Figure 3 from left to right), and a second conduit through which air to be cooled flows in an opposite direction (in Figure 3 from right to left). A Peltier element 28' is located in the second conduit and is in thermal contact with the heat exchanger 26'. Means 27', such as zig-zag arranged portions of metal sheet, are provided in the first conduit in order to avoid, or at least minimise, any turbulences caused by the flow of liquid coolant through the first conduit. Cooling fins 29' are arranged inside the second conduit in order to more evenly distribute the cooling power provided by the Peltier element 28' and to extend the time period during which the incoming air to be cooled stays within the second conduit. A fan 30' is also provided in order to promote air flow through the second conduit, and thus air circulation inside the cooling chamber 34 of the cooling device 20 of Figure 2. The entire assembly shown in Figure 3 may be disposed within the cooling chamber 34 of the cooling device 20 of Figure 2. Additionally, a throttle element 32, such as a control valve, may be arranged in the return (the right hand side of the first conduit in Figure 3) in order to control the flow volume of the liquid coolant through the first conduit of the heat exchanger 26'.

## Claims

1. Cooling device (20) for installation in an aircraft, in particular a passenger aircraft, comprising a heat exchanger (26) configured for flow-through of a liquid coolant for pre-cooling a cooling chamber (34) of the cooling device (20) to a temperature of the liquid coolant, the heat exchanger (26) being coupled in a heat-transferring manner to a thermoelectric cooling element (28) which is in thermal contact with the cooling chamber (34) of the cooling device (20) for cooling the cooling chamber (34) to a temperature which is below the temperature of the liquid coolant, wherein the heat exchanger (26) and the thermoelectric cooling element (28) are disposed inside the cooling chamber (34) of the cooling device (20), and wherein the heat exchanger (26) is configured for connection to a liquid coolant supply system installed on board the aircraft.

2. Cooling device according to Claim 1, **characterised in that** the thermoelectric cooling element (28) is a Peltier element.

3. Cooling device according to Claim 1 or 2, **characterised in that** the heat exchanger (26) is provided with an intake (22) and a return (24) for the liquid coolant for connection to a line system which is installed on board the aircraft.

4. Cooling device according to any one of the preceding Claims, **characterised in that** the heat exchanger (26) is configured according to the counterflow principle.

5. Cooling device according to any one of the preceding Claims, **characterised in that** the heat exchanger (26) comprises a throttle element (32) for throttling the flow volume of the liquid coolant through the heat exchanger (26).

6. Cooling device according to Claim 5, **characterised in that** the throttle element (32) is a control valve.

7. Cooling device according to Claim 5 or 6, insofar as these are dependent on Claim 3, **characterised in that** the throttle element (32) is disposed in the return (24).

8. Cooling device according to any one of the preceding Claims, **characterised in that** a fan (30) is disposed in the cooling chamber (34).

9. Cooling device according to any one of the preceding Claims, **characterised in that** the liquid coolant does not undergo a phase transition during operation of the cooling device.

10. Cooling device according to any one of the preceding Claims, **characterised in that** the heat exchanger (26) and the thermoelectric cooling element (28) are configured such that the cooling chamber (34) can be cooled to a temperature below 0° Celsius.

## Patentansprüche

1. Kühlvorrichtung (20) zum Einbau in ein Flugzeug, insbesondere ein Passagierflugzeug, mit einem zur Durchströmung mit einem flüssigen Kühlmittel ausgestalteten Wärmetauscher (26) zur Vorkühlung eines Kühlraumes (34) der Kühlvorrichtung (20) auf eine Temperatur des flüssigen Kühlmittels, wobei der Wärmetauscher (36) wärmeübertragend mit einem in Wärmekontakt mit dem Kühlraum (34) der Kühlvorrichtung (20) stehenden thermoelektrischen Kühlelement (28) zur Kühlung des Kühlraumes (34) auf eine Temperatur, die unterhalb der Temperatur des flüssigen Kühlmittels liegt, gekoppelt ist, wobei der Wärmetauscher (26) und das thermoelektrische Kühlelement (28) innerhalb des Kühlraumes (34) der Kühlvorrichtung (20) angeordnet sind und der Wärmetauscher (26) zur Verbindung mit einem an Bord des Flugzeuges installierten Kühlmittelversorgungssystem ausgestaltet ist.

2. Kühlvorrichtung nach Anspruch 1,
**dadurch gekennzeichnet, dass** das thermoelektrische Kühlelement (28) ein Peltier-Element ist.

3. Kühlvorrichtung nach Anspruch 1 oder 2,
**dadurch gekennzeichnet, dass** der Wärmetauscher (26) mit einem Zulauf (22) und einem Rücklauf (24) für das flüssige Kühlmittel zum Anschluss an ein an Bord des Flugzeuges installiertes Leitungssystem versehen ist.

4. Kühlvorrichtung nach einem der vorhergehenden Ansprüche,
**dadurch gekennzeichnet, dass** der Wärmetauscher (26) nach dem Gegenstromprinzip ausgebildet ist.

5. Kühlvorrichtung nach einem der vorhergehenden Ansprüche,
**dadurch gekennzeichnet, dass** der Wärmetauscher (26) ein Drosselelement (32) zur Drosselung der Durchflussmenge des flüssigen Kühlmittels durch den Wärmetauscher (26) aufweist.

6. Kühlvorrichtung nach Anspruch 5,
**dadurch gekennzeichnet, dass** das Drosselelement (32) ein Regelventil ist.

7. Kühlvorrichtung nach Anspruch 5 oder 6, soweit diese vom Anspruch 3 abhängig sind,
**dadurch gekennzeichnet, dass** das Drosselelement (32) in dem Rücklauf (24) angeordnet ist.

8. Kühlvorrichtung nach einem der vorhergehenden Ansprüche,
**dadurch gekennzeichnet, dass** in dem Kühlraum (34) ein Ventilator (30) angeordnet ist.

9. Kühlvorrichtung nach einem der vorhergehenden Ansprüche,
**dadurch gekennzeichnet, dass** während des Betriebs der Kühlvorrichtung das flüssige Kühlmittel keinem Phasenübergang ausgesetzt wird.

10. Kühlvorrichtung nach einem der vorhergehenden Ansprüche,
**dadurch gekennzeichnet, dass** der Wärmetauscher (26) und das thermoelektrische Kühlelement (28) derart ausgebildet sind, dass der Kühlraum (34) auf eine Temperatur unter 0° Celsius abkühlbar ist.

## Revendications

1. Dispositif de refroidissement (20) destiné à être installé dans un aéronef, en particulier un aéronef de passagers, comprenant un échangeur de chaleur (26) configuré pour l'écoulement d'un liquide de refroidissement destiné à pré-refroidir une chambre de refroidissement (34) du dispositif de refroidissement (20) à une température du liquide de refroidissement, l'échangeur de chaleur (26) étant couplé à la manière d'un transfert de chaleur à un élément de refroidissement thermoélectrique (28) qui est en contact thermique avec la chambre de refroidissement (34) du dispositif de refroidissement (20) pour refroidir la chambre de refroidissement (34) à une température qui se situe au-dessous de la température du liquide de refroidissement, dans lequel l'échangeur de chaleur (26) et l'élément de refroidissement thermoélectrique (28) sont disposés à l'intérieur de la chambre de refroidissement (34) du dispositif de refroidissement (20), et dans lequel l'échangeur de chaleur (26) est configuré pour un raccordement à un système d'alimentation en liquide de refroidissement installé à bord de l'aéronef.

2. Dispositif de refroidissement selon la revendication 1, **caractérisé en ce que** l'élément de refroidissement thermoélectrique (28) est un élément à effet Peltier.

3. Dispositif de refroidissement selon la revendication 1 ou 2, **caractérisé en ce que** l'échangeur de chaleur (26) est muni d'une admission (22) et d'un retour (24) pour le liquide de refroidissement pour raccordement à un système de canalisations qui est installé à bord de l'aéronef.

4. Dispositif de refroidissement selon l'une quelconque des revendications précédentes, **caractérisé en ce que** l'échangeur de chaleur (26) est configuré selon le principe d'échange à contre-courant.

5. Dispositif de refroidissement selon l'une quelconque des revendications précédentes, **caractérisé en ce que** l'échangeur de chaleur (26) comprend un élément d'étranglement (32) destiné à étrangler le flux-volume du liquide de refroidissement à travers l'échangeur de chaleur (26).

6. Dispositif de refroidissement selon la revendication 5, **caractérisé en ce que** l'élément d'étranglement (32) est une vanne de régulation.

7. Dispositif de refroidissement selon la revendication 5 ou 6, dans la mesure où celles-ci dépendent de la revendication 3, **caractérisé en ce que** l'élément d'étranglement (32) est disposé dans le retour (24).

8. Dispositif de refroidissement selon l'une quelconque des revendications précédentes, **caractérisé en ce qu'**un ventilateur (30) est disposé dans la chambre de refroidissement (34).

9. Dispositif de refroidissement selon l'une quelconque des revendications précédentes, **caractérisé en ce que** le liquide de refroidissement ne subit pas de transition de phase pendant le fonctionnement du dispositif de refroidissement.

10. Dispositif de refroidissement selon l'une quelconque des revendications précédentes, **caractérisé en ce que** l'échangeur de chaleur (26) et l'élément de refroidissement thermoélectrique (28) sont configurés d'une manière telle que la chambre de refroidissement (34) peut être refroidie à une température inférieure à 0° Celsius.
